# EUROPÄISCHE PATENTSCHRIFT

(11) **EP 2 058 545 B1**
(45) Veröffentlichungstag und Bekanntmachung des Hinweises auf die Patenterteilung: **10.10.2018**
(21) Anmeldenummer: 08014416.5
(22) Anmeldetag: 13.08.2008
(51) Int. Cl.: F16D 69/02

(54) **Verfahren zur Herstellung von Reibscheiben aus faserverstärkten keramischen Werkstoffen**
Method for producing friction discs from fibre-reinforced ceramic materials
Procédé de fabrication de couches de frottement en matières céramiques renforcées par des fibres

(30) Priorität: 09.11.2007 DE 102007053499
(43) Veröffentlichungstag der Anmeldung: 13.05.2009
(73) Patentinhaber: Audi AG, 85045 Ingolstadt (DE)
(72) Erfinder: Kienzle, Andreas, 86753 Balgheim-Möttingen (DE); Krätschmer, Ingrid, 86485 Biberach (DE)
(74) Vertreter: Bauer, Dominik Michael

(56) Entgegenhaltungen:
- EP-A2- 1 251 290
- EP-A2- 1 783 395
- WO-A1-02/26659
- DE-A1- 10 066 044
- DE-C2- 4 438 456

## Beschreibung

Die Erfindung betrifft ein Verfahren zur Herstellung von Reibscheiben aus faserverstärkten keramischen Werkstoffen mit einem mehrschichtigen Aufbau, insbesondere solche mit einer einem festigkeitsoptimierten Tragkörper und mindestens einer bezüglich ihrer tribologischen Eigenschaften optimierten Reibschicht.

Verfahren zur Herstellung von mehrschichtigen Reibscheiben sind bekannt aus dem Stand der Technik. So ist in der Patentanmeldung DE 44 38 456 A1 ein Verfahren beschrieben, bei dem mindestens ein Reibkörper gebildet aus einem mit Fasern aus Kohlenstoff verstärkten porösen Kohlenstoff-Körper, dessen Poren zumindest teilweise mit Silicium und Siliciumcarbid gefüllt sind, verbunden wird mit einem Tragkörper, der in kostengünstiger Weise aus porösem Kohlenstoff oder zumindest teilweise aus Kohlenstoff-Fasern hergestellt werden kann. Tragkörper und Reibkörper werden getrennt voneinander mit flüssigem Silicium infiltriert, wobei dieses in die Poren eindiffundiert und zumindest mit einem Teil des Kohlenstoff zumindest teilweise zu Siliciumcarbid reagiert. Beide Teile werden danach aufeinandergelegt, gegebenenfalls mit einer Zwischenlage aus einem Kohlenstoff-Vlies oder einer Kohlenstoff-Matte oder einem porösen pyrolysierbaren Material auf Cellulosebasis, und der Spalt wird mit flüssigem Silicium gefüllt, wobei sich eine Verbindungsschicht bildet, die im wesentlichen aus Silicium, gegebenenfalls in Mischung mit Siliciumcarbid, besteht. Ein weiterer hier beschriebener Weg ist, Tragkörper und Reibkörper in dem sogenannten CFC-Zustand zu belassen, also in der Form von mit Fasern aus Kohlenstoff verstärktem porösen Kohlenstoff, und diese dann aufeinandergelegt mit flüssigem Silicium zu infiltrieren, wobei sich die gewünschte Verbindungsschicht an der Berührungsfläche der Körper ausbildet.

Aus der Patentanmeldung DE 100 60 566 A1 ist ein Verfahren bekannt, bei dem zunächst mit Fasern aus Kohlenstoff verstärkte sogenannte Grünlinge hergestellt werden, nämlich Teile, die durch den Pyrolyseschritt erst zu porösen, mit Fasern aus Kohlenstoff verstärkten Kohlenstoff-Körpern umgewandelt werden; dieser Zustand wird gemeinhin als "CFK-Zustand" bezeichnet (mit Fasern aus Kohlenstoff verstärkter Kunststoff oder mit Fasern aus Kohlenstoff verstärktes gehärtetes Kunstharz). Diese Grünlinge für die Reibschicht und für den Tragkörper werden gemäß der ersten Alternative miteinander verklebt, und dann gemeinsam pyrolysiert und anschließend mit Silicium infiltriert ("siliciert"). In einer zweiten Alternative, die auch Gegenstand der Teilanmeldung DE 100 66 044 A1 ist, werden lediglich Grünlinge für die Reibschicht hergestellt, von denen einer in eine Form für den gewünschten Reibkörper eingelegt wird, die Form anschließend mit einem Material für den Tragkörper (Fasern aus Kohlenstoff und ein Bindemittel) befüllt wird, und darauf ein Grünling für die zweite Reibschicht aufgelegt und der Inhalt der befüllten Form dann gemeinsam durch Pressen verdichtet wird. In einer dritten Alternative schließlich wird eine Form zunächst mit einem Material für eine Reibschicht (Fasern aus Kohlenstoff und ein Bindemittel), dann mit einem Material für den Tragkörper wie oben, und abschließend wiederum mit einem Material für die zweite Reibschicht befüllt, der Inhalt wird danach gemeinsam gepresst. In diesen beiden Alternativen wird ebenfalls anschließend an das Pressen pyrolysiert und mit Silicium infiltriert. Gemeinsames Merkmal ist hier, dass die für die Reibschicht eingesetzten Fasern kürzer als die in dem Tragkörper sind.

Das in der Patentanmeldung DE 100 60 566 genannte Problem, dass sowohl bei einer Ausführung der Reibschicht mit längeren Fasern (mit einer Länge wie die im Tragkörper) als auch bei einer Ausführung der Reibschicht ganz ohne Fasern stets großflächige Ausbrüche in der Reibschicht auftreten, soll durch die beschriebenen Maßnahmen gelöst werden.

Bei den Untersuchungen, die der vorliegenden Erfindung zugrundelagen, wurde jedoch gefunden, dass die üblichen faserhaltigen Reibschichten mit einem Massenanteil von Fasern oder Faserbündeln von bis zu 70 % bei Beanspruchung durch Bremsvorgänge Fehlstellen durch Ausbrennungen in den Bereichen bilden, in denen Fasern oder Faserbündel nahe der Oberfläche der Reibschichten anzutreffen sind. Diese Fehlstellen und Unebenheiten der Oberfläche der Reibschichten führen zu einem erhöhten Verschleiß der Bremsbeläge, der nicht akzeptabel ist. Wird hingegen der Massenanteil an Fasern oder Faserbündeln vermindert, so ergibt sich in der durch Pyrolyse carbonisierten Reibschicht ein von großen Rissen durchzogenes Entspannungsgefüge, das zumindest vom Aussehen nicht akzeptiert wird.

Es besteht daher die Aufgabe, einen Reibkörper mit einem Tragkörper und einer Reibschicht zu schaffen, die bei optimalen tribologischen Eigenschaften keine Ausbrennungen der Fasern bei Betrieb erleidet und die allenfalls feine Rissmuster aufweist. Weiter besteht die Aufgabe, ein Verfahren anzugeben zur Herstellung eines derartigen Reibkörpers, wobei eine Schädigung der Reibschichten bei dem Herstellungsprozess vermieden werden kann, und wobei das Verfahren mit einer möglichst geringen Anzahl von Einzelschritten auskommen soll.

Diese Aufgabe wurde gelöst durch ein Verfahren gemäß Anspruch 1.

Der carbonisierte Vorkörper für die Reibschicht, der als gegebenenfalls mit Carbonfasern verstärkter poröser Kohlenstoff-Körper vorliegt, wird vorteilhaft mit einem Tragkörper kombiniert, der entweder im CFK-Zustand (mit Carbonfasern verstärkter Körper mit einer Matrix enthaltend gehärtetes Kunstharz) oder im CSiC-Zustand vorliegt, also einem mit Carbonfasern verstärkten keramischen Körper, dessen Matrix Siliciumcarbid, Silicium und Kohlenstoff enthält.

Die Mischung enthält einen Massenanteil von 50 % bis 95 %, bevorzugt von 60 % bis 90 %, an Siliciumcarbid-Pulver, bevorzugt in der alpha-Modifikation, mit einem mittleren Teilchendurchmesser von 50 µm bis 120 µm, bevorzugt von 80 µm bis 100 µm, und einer Breite der Teilchengrößenverteilung, bestimmt als Quotient des Massenmittels und des Zahlenmittels des Teilchendurchmessers, von bevorzugt 1,5 bis 3,0, besonders bevorzugt von 1,8 bis 2,5. Des weiteren enthält die Mischung Silicium-Pulver, in einem Massenanteil von 5 % bis 20 %, bevorzugt von 10 % bis 17 %, und einer mittleren Teilchengröße von vorzugsweise 30 µm bis 60 µm, besonders bevorzugt von 35 µm bis 55 µm. Das carbonisierbare Bindemittel ist ausgewählt aus Pechen und aus Polymeren, die bevorzugt vorwiegend aromatischen Charakter haben, wie Polystyrol, aromatische Polyester (Polyarylate, Polyestercarbonate, Polycarbonate), aromatische Polyamide und Polyimide, und besonders bevorzugt Duroplaste, und unter diesen besonders Phenolharze. Sein Massenanteil in der Mischung beträgt bevorzugt von 1 % bis 6 %, besonders bevorzugt von 2 % bis 5 %.

Sofern Fasern oder Faserbündel aus Kohlenstoff in der Mischung enthalten sind, beträgt ihr Massenanteil 0,1 % bis 10 %, bevorzugt 0,2 % bis 3 %. Die Fasern liegen bevorzugt in Form von flachen Bündeln paralleler oder im wesentlichen paralleler Einzelfasern vor, mit einer Länge gemessen in Faserrichtung von 1 mm bis 10 mm, bevorzugt von 2 mm bis 6 mm, einer Breite gemessen senkrecht zur Faserrichtung von 0,1 mm bis 1 mm, bevorzugt von 0,2 mm bis 0,5 mm, und einer Höhe (Dicke, ebenfalls senkrecht zur Faserrichtung und auch senkrecht zur Breite gemessen) von 20 µm bis 600 µm, bevorzugt von 100 µm bis 450 µm, wobei die Höhe stets geringer als die Breite der flachen Bündel ist. Gegebenenfalls kann die Mischung noch Zusätze von den Reibwert modifizierenden Zusätzen enthalten, insbesondere Carbide von Übergangsmetallen wie Wolframcarbid oder Titancarbid, sowie Kohlenstoff in Form von Pulvern, Graphit oder auch Borcarbid.

Die Mischung wird in einem Mischer homogenisiert und in eine Pressform gefüllt. Durch Verpressen bei einer Temperatur von 120 °C bis 280 °C, bevorzugt 150 °C bis 250 °C, je nach dem verwendeten Bindemittel, werden die Formlinge in der Pressform geformt und gehärtet, anschließend entformt und bei einer Temperatur von 750 °C bis 1300 °C, bevorzugt von 900 °C bis 1200 °C, unter Ausschluss von Sauerstoff carbonisiert.

Zur Herstellung von Reibscheiben können diese carbonisierten Reibschicht-Vorkörper entweder auf einen Grünling für den Tragkörper (im CFK-Zustand, also gehärtet, aber noch nicht carbonisiert) aufgeklebt werden, oder in eine Pressform eingelegt werden wobei auf einen eingelegten carbonisierten Reibschicht-Vorkörper eine Pressmasse für den Tragkörper enthaltend Verstärkungsfasern aus Kohlenstoff und ein Bindemittel sowie gegebenenfalls Füllstoffe gefüllt und geebnet wird, anschließend wird ein weiterer carbonisierter Reibschicht-Vorkörper aufgelegt, die Formfüllung wird gepresst und gehärtet, und nach dem Härten in der oben beschriebenen Weise zuerst carbonisiert, und schließlich mit flüssigem Silicium bei einer Temperatur von bevorzugt ca. 1500 °C bis ca. 1800 °C unter vermindertem Druck (0,1 hPa bis 5 hPa) infiltriert, wobei zumindest ein Teil des bei der Carbonisierung gebildeten Kohlenstoffs mit zumindest einem Teil des eingebrachten Siliciums zu Siliciumcarbid reagiert.

Zum Aufkleben auf einen Grünling für den Tragkörper wird ein Kleber bevorzugt, der einen Massenanteil von bevorzugt mindestens 90 % eines wässrigen Phenolresolharzes und bis zu 10 % Carbonfasern mit einem Durchmesser von 6 µm bis 12 µm und einer Länge von bevorzugt 0,5 mm bis 1 mm enthält. Dabei werden bevorzugt in Wasser oder auch in Alkoholen oder deren Mischungen mit Wasser gelöste flüssige Phenolresolharze eingesetzt, deren Lösungen einen Festkörper-Massenanteil von 60 % bis 80 % und eine Viskosität (nach Höppler, gemessen bei 20 °C nach DIN 53015 oder ISO 0371) von 500 mPa·s bis 1000 mPa·s und einen pH-Wert von ca. 7 aufweisen.

Überraschenderweise ergibt sich durch die Kombination von carbonisierten Reibschicht-Vorkörpern mit Tragkörper-Grünlingen im CFK-Zustand bzw. mit der für den Tragkörper bestimmten Pressmasse oder mit Tragkörpern in C/SiC-Zustand und den anschließend durchlaufenen oben beschriebenen Schritten nach der Silicierung eine Reibscheibe mit nur feinem Rissmuster und, soweit in der Reibschicht Fasern enthalten sind, mit einer verbesserten Beständigkeit gegen Ausbrennen der Fasern.

Die Erfindung wird durch die nachfolgenden Beispiele erläutert.

### Beispiel 1 (erfindungsgemäß, Faser-Massenanteil in der Reibschicht: 0,4 %)

In einem Intensiv-Mischer werden 603 g Siliciumcarbid-Pulver (alpha-Modifikation, mittlerer Teilchendurchmesser 90 µm), 90 g Silicium-Pulver mit einem mittleren Teilchendurchmesser von 45 µm, 20 g eines trockenen Phenolresolharzes (®Bakelite 312, Hexion Specialty Chemicals GmbH), sowie 3 g Kohlenstoff-Kurzfaserbündel mit einer Länge gemessen in Faserrichtung, von 0,5 mm bis 5 mm, und einem mittleren Bündeldurchmesser von 0,1 mm bis 1 mm gemischt und durch Zugabe von 30 g eines dickflüssigen Paraffinöls staubfrei gemacht.

Diese Mischung wurde gleichmäßig verteilt in eine zylindrische Pressform mit zylindrischen Innen- und Außenwänden gefüllt und verpresst zu einer ca. 3 mm dicken Zylinderringscheibe mit einem inneren Durchmesser von 164 mm und einem äußeren Durchmesser von 425 mm bei einem Pressdruck von 1 MPa, bei einer Temperatur von 170 °C und mit einer Härtungszeit von 17 Minuten. Nach dem Entformen wurde der Pressling in einem Ofen unter Schutzgas (Argon) mit einer Heizrate von 1 K / min auf eine Temperatur von 900 °C erhitzt, bei dieser Temperatur eine Stunde lang gehalten und danach unter Schutzgas auf Raumtemperatur (20 °C) abgekühlt. Der Formling schrumpfte durch den Carbonisierungsprozess um ca. 1,5 % im Durchmesser. Abschließend wurde die Zylinderringscheibe auf eine Dicke von 2 mm geschliffen.

Zwei derartige Zylinderringscheiben wurden mittels eines Klebers (wässriges Phenolharz enthaltend einen Massenanteil von 80 % eines wässrigen Phenolresols, ®Bakelite PF Norsophen 1203, und 20 % Kohlenstoff-Kurzfaserbündel mit einer Länge gemessen in Faserrichtung, von 0,5 mm bis 3 mm, und einem mittleren Bündeldurchmesser von 0,1 mm bis 0,5 mm, Kleberschichtdicke 1,5 mm, aufgerakelt) auf einen zylinderringförmigen Tragkörper in CFK-Zustand aufgeklebt, der durch Pressen einer Mischung mit einem Massenanteil von 70 % an Bündeln von Carbonfasern mit einer Faserbündellänge im Bereich von 5 mm bis 40 mm und einer mittleren Faserbündeldicke von 1,5 mm, mit einem Massenanteil von 21 % an einem trockenen Phenolharz (®Bakelite 312, Hexion Specialty Chemicals), und einem Massenanteil von 9 % eines festen Pechs mit einer Erweichungstemperatur von ca. 235 °C (®Carbores P, Rütgers Chemicals) bei einem Druck von 1,2 MPa und Aushärten bei 130 °C hergestellt wurde. Der Tragkörper und die aufgeklebten carbonisierten Zylinderringscheiben wurden in einer Warmfließpresse verpresst, bei einem Druck von 2 MPa und einer Temperatur von 160 °C ausgehärtet, anschließend bei 900 °C unter Schutzgas carbonisiert und dann bei 1700 °C unter vermindertem Druck von max. 10 Pa (0,1 mbar) mit flüssigem Silicium infiltriert, wobei der überwiegende Anteil des während der Carbonisierung aus dem Phenolharz und dem Pech gebildete Kohlenstoff zu Siliciumcarbid umgewandelt wurde. Nach dem Silicieren bilden die aufgeklebten Zylinderringscheiben die Reibschichten in dem erhaltenen Verbund.

### Beispiel 2 (Vergleich)

Das Verfahren von Beispiel 1 wurde wiederholt, jedoch wurde der Tragkörper nach dem Pressen separat carbonisiert (Aufheizen auf 900 °C mit ca. 1 K/min, unter Schutzgas, eine Stunde bei 900 °C halten, danach Abkühlen wie oben), und zwei der carbonisierten Zylinderringscheiben mit 2 mm Dicke (wie in Beispiel 1) wurden auf den oberflächlich plan geschliffenen und aufgerauhten carbonisierten Tragkörper mittels desselben Klebers wie in Beispiel 1 angegeben aufgeklebt, und der Verbund wurde auf dieselbe Weise verpresst. Bei diesem Verfahren wird gegenüber dem Verfahren gemäß Beispiel 1 ein weiterer separater Carbonisierungsschritt für den Tragkörper erforderlich.

### Beispiel 3 (Vergleich)

Das Verfahren von Beispiel 1 wurde wiederholt, jedoch wurden in diesem Fall zwei der ca. 3 mm dicken Zylinderringscheiben nicht separat carbonisiert, sondern im CFK-Zustand, also nach dem Pressen und Aushärten) oberflächlich plan geschliffen und auf einen plan geschliffenen Tragkörper ebenfalls im CFK-Zustand mit demselben Kleber auf dieselbe Weise verklebt. Der Verbund wurde wie im Beispiel 1 verpresst und ausgehärtet, und anschließend der im Beispiel 1 beschriebenen Carbonisierung und anschließend der Infiltration mit flüssigem Silicium unterworfen. Bei diesem Verfahren wird insgesamt nur eine Carbonisierung erfordert; da die dünnen, die Reibschicht bildenden Zylinderringscheiben jedoch stärker schrumpfen als die Tragkörper, ergibt sich ein Verbund mit starker Rissbildung in der Reibschicht.

### Beispiel 4

Das Verfahren gemäß Beispiel 1 wurde wiederholt, jedoch wurde der Tragkörper nach der Formgebung separat bei 900 °C ansonsten wie im Beispiel 1 beschrieben carbonisiert. Nach dem Abkühlen wurde die Oberfläche plangeschliffen, der Tragkörper wurde dann allein der im Beispiel 1 beschriebenen Silicierung unterworfen. Der silicierte Tragkörper wurde dann oberflächlich an den Kontaktflächen zu den aufzubringenden Reibschichten durch Sandstrahlen und anschließendes Waschen mit Aceton gereinigt, nach Trocknen bei 80 °C während einer Stunde wurden auf den silicierten Tragkörper zwei der carbonisierten dünnen Zylinderringscheiben mittels des in Beispiel 1 verwendeten Klebers auf dieselbe Weise aufgeklebt, der Verbund wurde verpresst und gehärtet wie in Beispiel 1 beschrieben. Nach dem Härten wurde der Verbund mit flüssigem Silicium bei vermindertem Druck wie im Beispiel 1 beschrieben siliciert. Beim Aufheizen carbonisiert die dünne Kleberschicht ohne Probleme. Die Reibschichten sind oberflächlich fehlerfrei mit sehr feinem Rissgefüge, nachteilig ist jedoch gegenüber dem Verfahren gemäß Beispiel 1 das zweimalige Silicieren. Überraschenderweise wurde hier gefunden, dass die Festigkeit des Verbundes offenbar durch das zweimalige Silicieren niedriger ist als bei dem Verfahren gemäß Beispiel 1.

### Beispiel 5 (Vergleich)

Das Verfahren des Beispiels 4 wurde wiederholt, jedoch wurden die dünnen Zylinderringscheiben und der Tragkörper separat voneinander carbonisiert und siliciert. Nach oberflächlicher Bearbeitung durch Planschleifen an den Kontaktflächen wurde dann der Verbund durch Aufeinanderlegen einer der dünnen silicierten Zylinderringscheiben, darauf der silicierte Tragkörper, und darauf wieder eine der dünnen silicierten Zylinderringscheiben gebildet. Die Verbunde wurden wie oben beschrieben in einem Ofen auf 1700 °C geheizt, und flüssiges Silicium wurde in der Spalte angeboten, wobei in einer Ausführungsform zwischen die Teile vor dem Aufheizen zum Silicieren jeweils ein sehr feinkörniges Silicium-Pulver gestreut wurde, in einer anderen Ausführungsform wurde flüssiges Silicium durch Dochte an die Spalte zwischen den einzelnen Scheiben geführt. In einer dritten Ausführungsform wurde gemäß dem deutschen Patent DE 44 38 456 C2 eine Zwischenlage aus dünnem Carbonfaserfilz zwischen die Scheiben gelegt, die im Silicierschritt das flüssige Silicium aufsaugte und bei der der Kohlenstoff des Filzes mit dem Silicium zu Siliciumcarbid reagierte. Es ließ sich zwar durch sorgfältige Oberflächenbearbeitung und Anheben der Silicierungstemperatur auf bis zu 1900 °C eine fehlstellenfreie Verbindungsschicht aus Silicium bzw. aus Silicium und Siliciumcarbid erzielen, jedoch war die Verbindungsschicht dicker als in der geklebten Ausführungsform der Beispiele 1 bis 4.

Aus den Beispielen ergibt sich, dass sowohl die Kombination eines CFC-Reibschicht-Vorkörpers mit einem CFK-Tragkörper und auch mit einen CSiC-Tragkörper zu guten Eigenschaften des Verbundkörpers nach den erforderlichen weiteren Prozessschritten führen, während sowohl die Kombination von Reibschicht-Vorkörper und Tragkörper-Vorkörper jeweils im CFC-Zustand als auch die Kombination von CFK-Reibschicht-Vorkörper und CFK-Tragkörper-Vorkörper zu Verbunden führen, die nach den erforderlichen weiteren Prozessschritten Verbunde mit starker Rissstruktur ergeben. Auch eine Kombination von Reibschicht-Körper und Tragkörper im CSiC-Zustand und "Verklebung" durch Si oder einer Mischung von Si und SiC als Hartlot ergibt keine befriedigenden Ergebnisse. Es war nicht vorhersehbar, dass ausgerechnet die Kombination von CFC-Reibschichten mit entweder einem CFK-Tragkörper oder einem CSiC-Tragkörper zu günstigen Ergebnissen führen würde. Von diesen beiden technisch gleich guten Möglichkeiten hat die Verfahrensweise gemäß Beispiel 1 den zusätzlichen Vorteil, dass nur einmal siliciert werden muss.

## Patentansprüche

1. Verfahren zur Herstellung von Reibscheiben aus faserverstärkten keramischen Werkstoffen, bei dem
- im ersten Schritt ein Reibschicht-Vorkörper in Form einer separat hergestellten zylinderringförmigen Scheibe hergestellt wird, wobei zunächst eine Mischung von Siliciumcarbid-Pulver mit einem mittleren Teilchen-durchmesser von 50 µm bis 120 µm, in einem Massenanteil in der Mischung von 50 % bis 95 %, von Silicium-Pulver in einem Massenanteil in der Mischung von 5 % bis 20 %, von einem carbonisierbaren Bindemittel ausgewählt aus Pechen und Polymeren, und ohne Zusatz von Kohlenstoff-Kurzfasern oder mit Zusatz von Kohlenstoff-Kurzfasern in einem Massenanteil in der Mischung von 0,1 % bis 10 % bereitet wird, die in eine Pressform gefüllt und zu einer zylinderringförmigen Scheibe verpresst und gehärtet wird,
- im zweiten Schritt die gehärtete zylinderringförmige Scheibe bei einer Temperatur von 750 °C bis 1300 °C unter Ausschluss von Sauerstoff zu einem Reibschicht-Vorkörper carbonisiert wird,
- im dritten Schritt der carbonisierte Vorkörper für die Reibschicht mit einem Tragkörper kombiniert wird, der
- entweder im CFK-Zustand vorliegt, also als mit Carbonfasern verstärkter Körper mit einer Matrix enthaltend gehärtetes Kunstharz,
- oder im CSiC-Zustand vorliegt, also einem mit Carbonfasern verstärkten keramischen Körper, dessen Matrix Siliciumcarbid, Silicium und Kohlenstoff enthält, oder
- durch Einlegen des carbonisierten Vorkörpers für die Reibschicht in eine Pressform, Auffüllen und Einebnen einer Pressmasse für den Tragkörper auf den eingelegten carbonisierten Vorkörper für die Reibschicht, wobei die Pressmasse Verstärkungsfasern aus Kohlenstoff, ein Bindemittel sowie gegebenenfalls Füllstoffe enthält, anschließendes Auflegen eines weiteren carbonisierten Reibschicht-Vorkörpers, sowie Pressen und Härten der Formfüllung gebildet wird, und
- im vierten Schritt die Kombination des carbonisierten Vorkörpers für die Reibschicht mit dem Tragkörper einem Carbonisierungsschritt unterworfen wird, falls der Tragkörper im CFK-Zustand vorliegt, und anschließend
- im fünften Schritt die Kombination des carbonisierten Vorkörpers für die Reibschicht mit dem Tragkörper mit flüssigem Silicium bei einer Temperatur von bevorzugt 1500 °C bis 1800 °C unter vermindertem Druck infiltriert wird.

2. Verfahren nach Anspruch 1, **dadurch gekennzeichnet, dass** die carbonisierten Reibschicht-Vorkörper auf einen Grünling für den Tragkörper im CFK-Zustand, also gehärtet, aber noch nicht carbonisiert, aufgeklebt werden und nach dem Härten in der oben beschriebenen Weise zuerst carbonisiert, und schließlich mit flüssigem Silicium bei einer Temperatur von bevorzugt 1500 °C bis 1800 °C unter vermindertem Druck infiltriert, wobei zumindest ein Teil des bei der Carbonisierung gebildeten Kohlenstoffs mit zumindest einem Teil des eingebrachten Siliciums zu Siliciumcarbid reagiert.

3. Verfahren nach Anspruch 1, **dadurch gekennzeichnet, dass** der carbonisierte Vorkörper für die Reibschicht mit einem Tragkörper kombiniert wird, der im CSiC-Zustand vorliegt, also einem mit Carbonfasern verstärkten keramischen Körper, dessen Matrix Siliciumcarbid, Silicium und Kohlenstoff enthält.

4. Verfahren nach einem der Ansprüche 2 oder 3, **dadurch gekennzeichnet, dass** der carbonisierte Vorkörper für die Reibschicht auf dem Tragkörper oder dessen Vorkörper mit Hilfe eines Klebers fixiert wird, der einen Massenanteil von mindestens 90 % eines wässrigen Phenolresolharzes und bis zu 10 % Carbonfasern mit einem Durchmesser von 6 µm bis 12 µm und einer Länge von bevorzugt 0,5 mm bis 1 mm enthält.

5. Verfahren nach Anspruch 1, **dadurch gekennzeichnet, dass** die Mischung zur Herstellung des Reibschicht-Vorkörpers einen Massenanteil von 50 % bis 95 % von Siliciumcarbid-Pulver, einen Massenanteil von 4 % bis 20 % von Silicium-Pulver, und einen Massenanteil von 1 % bis 6 % eines carbonisierbaren Bindemittels ausgewählt aus Pechen und Polymeren enthält.

6. Verfahren nach Anspruch 5, **dadurch gekennzeichnet, dass** zusätzlich Fasern oder Faserbündel aus Kohlenstoff in der Mischung enthalten sind, in einem Massenanteil von 0,1 % bis 10 %.

7. Verfahren nach Anspruch 6, **dadurch gekennzeichnet, dass** die Fasern in Form von flachen Bündeln paralleler oder im wesentlichen paralleler Einzelfasern vorliegen, mit einer Länge gemessen in Faserrichtung von 1 mm bis 10 mm, einer Breite gemessen senkrecht zur Faserrichtung von 0,1 mm bis 1 mm, und einer Höhe, ebenfalls senkrecht zur Faserrichtung und auch senkrecht zur Breite gemessen, von 20 µm bis 600 µm, wobei die Höhe stets geringer als die Breite der flachen Bündel ist.

## Claims

1. Method for producing friction discs from fibre-reinforced ceramic materials, in which
- in the first step a friction layer preform is produced in the form of a separately produced cylinder-circular disc, wherein initially a mixture is prepared from silicon carbide powder with a mean particle diameter of 50 µm to 120 µm, in a mass percentage in the mixture of 50 % to 95 %, from silicon powder in a mass percentage in the mixture of 5 % to 20 %, from a carbonisable binder selected from pitches and polymers, and without the addition of short carbon fibres or with the addition of short carbon fibres in a mass percentage in the mixture of 0.1 % to 10 %, which are filled into a mould, pressed into a cylinder-circular disc and hardened,
- in the second step the hardened cylinder-circular disc is carbonised at a temperature of 750 °C to 1,300 °C with the exclusion of oxygen, to form a friction layer preform,
- in the third step the carbonised preform for the friction layer is combined with a carrier body, which
- either exists in the CFRP state, i.e. as body reinforced with carbon fibres having a matrix containing hardened synthetic resin,
- or exists in the CSiC state, i.e. a ceramic body reinforced with carbon fibres, the matrix of which contains silicon carbide, silicon and carbon, or
- is formed through insertion of the carbonised preform for the friction layer into a mould, filling-up and levelling-off of a moulding compound for the carrier body on the inserted carbonised preform for the friction layer, wherein the moulding compound contains reinforcing fibres of carbon, a binder and also optionally fillers, subsequent placing of a further carbonised friction layer preform on top, and also pressing and hardening of the mould filling, and
- in the fourth step the combination of the carbonised preform for the friction layer with the carrier body is subjected to a carbonising step, if the carrier body exists in the CFRP state, and thereafter
- in the fifth step the combination of the carbonised preform for the friction layer with the carrier body is infiltrated with liquid silicon at a temperature of preferably 1,500 °C to 1,800 °C under reduced pressure.

2. Method according to claim 1, **characterised in that** the carbonised friction layer preforms are stuck onto a preform for the carrier body in the CFRP state, i.e. hardened, but not yet carbonised, and after hardening in the manner described above are first carbonised, and finally infiltrated with liquid silicon at a temperature of preferably 1,500 °C to 1,800 °C under reduced pressure, wherein at least some of the carbon formed during carbonising reacts with at least some of the introduced silicon to form silicon carbide.

3. Method according to claim 1, **characterised in that** the carbonised preform for the friction layer is combined with a carrier body existing in the CSiC state, i.e. a ceramic body reinforced with carbon fibres, the matrix of which contains silicon carbide, silicon and carbon.

4. Method according to either of the claims 2 or 3, **characterised in that** the carbonised preform for the friction layer is fixed on the carrier body or its preform with the help of an adhesive containing a mass percentage of at least 90 % of an aqueous phenol resol resin and up to 10 % carbon fibres with a diameter of 6 µm to 12 µm and a length of preferably 0.5 mm to 1 mm.

5. Method according to claim 1, **characterised in that** the mixture for producing the friction layer preform contains a mass percentage of 50 % to 95 % of silicon carbide powder, a mass percentage of 4 % to 20 % of silicon powder, and a mass percentage of 1 % to 6 % of a carbonisable binder selected from pitches and polymers.

6. Method according to claim 5, **characterised in that** in addition fibres or fibre bundles of carbon are contained within the mixture, in a mass percentage of 0.1 % to 10 %.

7. Method according to claim 6, **characterised in that** the fibres exist in the form of flat bundles of parallel or substantially parallel single fibres, with a length - measured in the direction of the fibres - of 1 mm to 10 mm, a width - measured perpendicular to the direction of the fibres - of 0.1 mm to 1 mm, and a height - measured likewise perpendicular to the direction of the fibres and also perpendicular to the width - of 20 µm to 600 µm, wherein the height is always less than the width of the flat bundles.

## Revendications

1. Procédé servant à fabriquer des disques de friction à partir de matériaux en céramique renforcés par des fibres, où
- dans une première étape, une ébauche de couche de friction est fabriquée sous la forme d'un disque de forme annulaire cylindrique fabriqué séparément, dans lequel est préparé dans un premier temps un mélange composé de poudre de carbure de silicium avec un diamètre de particules moyen allant de 50 µm à 120 µm, en une fraction massique dans le mélange allant de 50 % à 95 %, de poudre de silicium en une fraction massique dans le mélange allant de 5 % à 20%, d'un liant carbonisable choisi parmi des poix et des polymères, et sans ajout de fibres courtes de carbone ou avec ajout de fibres courtes de carbone en une fraction massique dans le mélange allant de 0,1 % à 10 %, qui est fourni dans un moule de pressage et est comprimé et durci en un disque de forme annulaire cylindrique,
- dans la deuxième étape, le disque de forme annulaire cylindrique durci est carbonisé à une température allant de 750 °C à 1.300 °C sans apport d'oxygène en une ébauche de couche de friction,
- dans la troisième étape, l'ébauche carbonisée pour la couche de friction est combinée à un corps de support, qui
-- est présent soit dans l'état renforcé par des fibres de carbone, donc en tant que corps renforcé par des fibres de carbone avec une résine synthétique durcie contenant une matrice,
-- ou est présent dans l'état CSiC, donc un corps en céramique renforcé par des fibres de carbone, dont la matrice contient du carbure de silicium, du silicium et du carbone, ou
-- qui est formé par l'insertion de l'ébauche carbonisée pour la couche de friction dans un moule de pressage, par la fourniture et le nivellement d'une matière à presser pour le corps de support sur l'ébauche carbonisée insérée pour la couche de friction, dans lequel la matière à presser contient des fibres de renforcement composées de carbone, un liant ainsi qu'éventuellement des charges, par le placement consécutif d'une autre ébauche de couche de friction carbonisée ainsi que par le pressage et le durcissement de la matière de remplissage de moule, et
- dans la quatrième étape, la combinaison de l'ébauche carbonisée pour la couche de friction et du corps de support est soumise à une étape de carbonisation, si le corps de support est présent dans l'état renforcé par des fibres de carbone, et ensuite
- dans la cinquième étape, la combinaison de l'ébauche carbonisée pour la couche de friction et du corps de support est imprégnée avec de silicium liquide à une température allant de manière préférée de 1.500 °C à 1.800 °C sous une pression réduite.

2. Procédé selon la revendication 1, **caractérisé en ce que** les ébauches de couche de friction carbonisées sont collées, donc durcies, sans être carbonisées toutefois sur un corps vert pour le corps de support dans l'état renforcé par des fibres de carbone et, après le durcissement de la manière décrite plus haut, sont carbonisées dans un premier temps et sont imprégnées pour finir de silicium liquide à une température allant de manière préférée de 1.500 °C à 1.800 °C sous une pression réduite, dans lequel au moins une partie du carbone formé lors de la carbonisation réagit avec au moins une partie du silicium introduit pour donner du carbure de silicium.

3. Procédé selon la revendication 1, **caractérisé en ce que** l'ébauche carbonisée pour la couche de friction est combinée à un corps de support, qui est présent dans l'état CSiC, donc un corps en céramique renforcé avec des fibres de carbone, dont la matrice contient du carbure de silicium, du silicium et du carbone.

4. Procédé selon l'une quelconque des revendications 2 ou 3, **caractérisé en ce que** l'ébauche carbonisée pour la couche de friction est fixée sur le corps de support ou son ébauche à l'aide d'une colle, qui contient une fraction massique d'au moins 90 % d'une résine résol phénolique aqueuse et jusqu'à 10 % de fibres de carbone avec un diamètre allant de 6 µm à 12 µm et une longueur allant de manière préférée de 0,5 mm à 1 mm.

5. Procédé selon la revendication 1, **caractérisé en ce que** le mélange servant à fabriquer l'ébauche de couche de friction contient une fraction massique allant de 50 % à 95 % de poudre de carbure de silicium, une fraction massique allant de 4 % à 20 % de poudre de silicium, et une fraction massique allant de 1 % à 6 % d'un liant carbonisable choisi parmi des poix et des polymères.

6. Procédé selon la revendication 5, **caractérisé en ce qu'**en outre des fibres ou des faisceaux de fibres composées ou composés de carbone sont contenues ou contenus dans le mélange en une fraction massique allant de 0,1 % à 10 %.

7. Procédé selon la revendication 6, **caractérisé en ce que** les fibres sont présentes sous la forme de faisceaux plats de fibres individuelles parallèles ou sensiblement parallèles, avec une longueur mesurée dans le sens des fibres allant de 1 mm à 10 mm, une largeur mesurée de manière perpendiculaire au sens des fibres allant de 0,1 mm à 1 mm, et une hauteur, éventuellement mesurée de manière perpendiculaire par rapport au sens des fibres et également de manière perpendiculaire par rapport à la largeur, allant de 20 µm à 600 µm, dans lequel la hauteur est systématiquement inférieure à la largeur des faisceaux plats.
